# EUROPÄISCHE PATENTSCHRIFT

(11) **EP 2 495 599 B1**
(45) Veröffentlichungstag und Bekanntmachung des Hinweises auf die Patenterteilung: **04.06.2014**
(21) Anmeldenummer: 12153240.2
(22) Anmeldetag: 31.01.2012
(51) Int. Cl.: G02B 23/14, F41G 1/38

(54) **Zielfernrohr mit vergrößerter Austrittspupille**
Telescopic sight with enlarged exit pupil
Lunette de visée dotée d'une pupille de sortie agrandie

(30) Priorität: 02.03.2011 DE 102011001044
(43) Veröffentlichungstag der Anmeldung: 05.09.2012
(73) Patentinhaber: Schmidt & Bender GmbH & Co. KG, 35444 Biebertal (DE)
(72) Erfinder: Hesse, Helke Karen, 35934 Gießen (DE)
(74) Vertreter: Patentanwälte Olbricht Buchhold Keulertz

(56) Entgegenhaltungen:
- WO-A1-2004/083931
- CH-A- 206 753
- DE-A1- 3 541 327
- DE-A1-102006 026 419
- DE-U1-202008 012 601
- US-A- 2 589 014
- US-A- 3 057 249
- US-A- 5 497 266
- US-A- 6 031 604
- US-A1- 2007 044 364
- US-A1- 2008 062 514

## Beschreibung

Die Erfindung betrifft ein Zielfernrohr gemäß dem Oberbegriff von Anspruch 1.

Zielfernrohre werden bei der Jagd und beim Militär dafür eingesetzt, mittels Waffen Ziele in großen Distanzen anzuvisieren. Hierfür verfügen sie über eine Linsenanordnung innerhalb eines Gehäuses, die ein Zielobjekt vergrößert. Insbesondere weist die Linsenanordnung wenigstens ein Objektiv und ein Okular auf. Das Objektiv ist ein sammelndes optisches System zur reellen optischen Abbildung des Zielobjektes und das Okular ein Linsensystem, durch das mit einem Auge in die Linsenanordnung geblickt wird.

Ein von dem Objektiv in einer objektivseitigen ersten Bildebene entworfenes Zwischenbild wird in einer okularseitigen zweiten Bildebene vergrößert abgebildet. Große Vergrößerungen erlauben nur eingeschränkte Sehfelder, welche insbesondere auf kurzen Distanzen keinen Überblick über einen größeren Bildausschnitt erlauben. Um auch diese Objekte effektiv ins Visier nehmen zu können, sieht der Stand der Technik eine variable Vergrößerung, den so genannten Zoom, vor. Zudem wird das anvisierte Objekt in der objektivseitigen ersten Bildebene seitenverkehrt und auf dem Kopf stehend abgebildet und muss deshalb aufgerichtet werden. Zur Aufrichtung des Bildes kommt deshalb ein Umkehrsystem innerhalb des Zielfernrohres zum Einsatz.

Oftmals ermöglicht das Umkehrsystem auch eine variable Vergrößerung, wofür eine axiale unabhängige bzw. definierte Verschiebung von zumeist zwei optischen Elementen erfolgt. Zu den optischen Elementen zählen dabei unter anderem Linsen und Kittlinsen. Hierdurch wird ein in der objektivseitigen ersten Bildebene erzeugtes Zwischenbild aufgerichtet und in der okularseitigen zweiten Bildebene, wo es betrachtet wird, vergrößert abgebildet.

Ergänzend können weitere Linsen zur Korrektur verschiedener Bildfehler im Zielfernrohr angeordnet sein, so zum Beispiel Achromaten zur Farbfehlerbehebung. Um ein Ziel anvisieren zu können, ist ein so genanntes Absehen, z.B. ein Fadenkreuz, in der ersten oder zweiten Bildebene angeordnet.

Nachteilig ist an einem solchen Zielfernrohr, dass die Austrittspupille von der Eintrittspupille und der eingestellten Vergrößerung abhängig ist. Dabei ist die Eintrittspupille das objektivseitige Bild der Blende, welches maximal den freien Durchmesser des Objektivs annehmen kann. Die resultierende Austrittspupille ist das okularseitige Bild der Blende und kann maximal den Durchmesser des Objektivs geteilt durch das Maß der Vergrößerung annehmen. Wenn die Vergrößerung des Zielfernrohrs erhöht wird, verkleinert sich also die Austrittspupille am Okular. Bei einem Objektivdurchmesser von 50 mm und einer 25-fachen Vergrößerung beträgt die Austrittspupille maximal 2 mm. Je kleiner die Austrittspupille ist, desto genauer muss das Auge des Schützen zu dieser positioniert werden.

Für den Schützen bedeutet die kleine Austrittspupille zum einen, dass diese schlecht gefunden wird. Insbesondere bei Nahkampfanwendungen ist dies ein erheblicher Nachteil, da der Schütze das Ziel nicht anvisieren kann, solange das Auge nicht korrekt zur Austrittspupille positioniert ist. Zum anderen wird gerade bei hochvergrößernden Zielfernrohren mit entsprechend kleinem Sehfeld bei großen Vergrößerungen die Empfindlichkeit gegenüber Bewegungen des Zielfernrohrs sehr hoch und ein ruhiges Visieren ist nur noch mit aufgelegter Waffe möglich. Für das menschliche Auge mit einer maximalen Pupille von 7 mm Durchmesser sind Austrittspupillen mit weniger als 2 mm schon sehr klein empfunden.

Dazu erfordern stark vergrößernde Zielfernrohre im Stand der Technik sehr große Objektivdurchmesser, um überhaupt noch hinreichend große Austrittspupillen bereitstellen zu können.

Diese machen das Zielfernrohr groß, schwer und unhandlich. Zudem sind große Objektive vor allem im militärischen Einsatz aufgrund der Sichtbarkeit aus großen Entfernungen unerwünscht. Auch die Materialkosten für das Zielfernrohrgehäuse und die Linsen steigen mit zunehmender Baugröße.

Ziel der Erfindung ist es deshalb, die Austrittspupille möglichst groß und vorzugsweise unabhängig von der eingestellten Vergrößerung eines Zielfernrohrs zu realisieren, wobei die Lösung eine geringe mechanische Komplexität und geringe Kosten verursachen soll. Außerdem soll das Zielfernrohr einfach und komfortabel handhabbar bleiben und eine hohe Lebensdauer aufweisen.

Hauptmerkmale der Erfindung sind im kennzeichnenden Teil von Anspruch 1 angegeben. Ausgestaltungen sind Gegenstand der Ansprüche 2 bis 11.

Bei einem Zielfernrohr mit einem Objektiv und einem Umkehrsystem, wobei zwischen dem Objektiv und dem Umkehrsystem eine erste Bildebene, sowie auf der dem Objektiv abgewandten Seite des Umkehrsystems eine zweite Bildebene angeordnet sind, und wobei ein von dem Objektiv in der ersten Bildebene entworfenes Zwischenbild aufgerichtet in der zweiten Bildebene abgebildet ist, sieht die Erfindung vor, dass auf der dem Objektiv abgewandten Seite des Umkehrsystems eine optische Einrichtung zur Sichtbarmachung des in der zweiten Bildebene vorhandenen Zwischenbilds angeordnet ist.

Eine solche optische Einrichtung ist geeignet dazu, dass in der zweiten Bildebene vorhandene Zwischenbild sichtbar zu machen. Dies erfolgt z.B. bei einer Ausgestaltung der optischen Einrichtung mit einer Mattscheibe durch das Prinzip der Rückprojektion. Durch die optische Einrichtung kann der Schütze das Bild direkt auf der optischen Einrichtung betrachten. Der Schütze muss folglich sein Auge nicht mehr exakt vor dem Zielfernrohr positionieren, sondern kann auch aus einem Winkel oder außerhalb der optischen Achse auf die optische Einrichtung blicken. Somit kann er ein Ziel wesentlich schneller erfassen. Dabei ist das Zielfernrohr mittels einfacher optischer Bauteile konstruierbar und kostet entsprechend wenig. Die mechanische Komplexität wird ebenfalls nicht oder nur unwesentlich erhöht, wodurch eine sichere Funktion des erfindungsgemäßen Zielfernrohrs unter verschiedensten Einsatzbedingungen gegeben ist. Außerdem ist das Zielfernrohr weiterhin einfach und komfortabel bedienbar.

Typischerweise verwendete Objektive weisen neben einer Objektivlinse auch einen ersten Objektiv-Achromat auf, wobei letzterer auf der dem Umkehrsystem abgewandten oder zugewandten Seite der Objektivlinse angeordnet ist. Hierdurch können Farbfehler verhindert werden, die ansonsten durch unterschiedliche Brechungsindexe der verschiedenen Lichtwellenlängen verursacht werden. Zusätzlich kann das Objektiv einen zweiten Objektiv-Achromat aufweisen, wobei dieser auf der dem Umkehrsystem zugewandten Seite des Objektivs angeordnet ist.

Die optische Einrichtung ist vorzugsweise in der zweiten Bildebene angeordnet, denn diese Position ist am besten dazu geeignet, ein Bild hoher Güte mit der optischen Einrichtung sichtbar machen zu können. Zusätzliche optische Elemente in oder an der zweiten Bildebene im Zielfernrohr könnten jedoch erfordern, dass die optische Einrichtung diese Position nicht einnehmen kann. Vorzugsweise wird die optische Einrichtung in einem solchen Fall jedoch so nah wie möglich an der zweiten Bildebene angeordnet.

In der ersten Bildebene des Zielfernrohrs kann weiterhin ein Absehen angeordnet sein. Alternativ ist es jedoch auch möglich, dass die optische Einrichtung ein Absehen aufweist. Ein solches Absehen könnte beispielsweise mit dem Rest der optischen Einrichtung verkittet sein. Um einen Einsatz auch bei Dämmerung oder Dunkelheit zu ermöglichen, kann das Absehen auch ein Leuchtabsehen sein. Der Schütze kann so unter verschiedenen Einsatzbedingungen ein Zielobjekt exakt anvisieren.

Besonders vorteilhaft ist die Erfindung, wenn das Umkehrsystem ein erstes optisches Element und ein zweites optisches Element aufweist, wobei vorzugsweise das erste optische Element bewegbar und objektivseitig im Umkehrsystem und das zweite optische Element bewegbar und auf Seiten der zweiten Bildebene im Umkehrsystem angeordnet sind, wodurch das in der ersten Bildebene entworfene Zwischenbild mit einer veränderbaren Vergrößerung in der zweiten Bildebene abgebildet ist. Trotz der unterschiedlichen Vergrößerungseinstellungen muss der Schütze auch bei großer Vergrößerung sein Auge nicht exakt vor dem Zielfernrohr positionieren. Vollkommen unabhängig von der Vergrößerung wird das in der zweiten Bildebene vorhandene Zwischenbild durch die optische Einrichtung sichtbar gemacht. Es ist für den Schützen somit bei großen Vergrößerungen wesentlich leichter ein Zielobjekt ins Visier zu nehmen und über einen längeren Zeitraum zu beobachten. Besonders zum tragen kommen die Vorteile bei einem Zoom größer 6-fach, bevorzugt größer 10-fach und besonders bevorzugt größer 15-fach.

Eine Ausgestaltung der Erfindung sieht vor, dass zwischen dem ersten optischen Element und der ersten Bildebene eine Feldlinse angeordnet ist. Diese dient der Bündelung eines Strahlengangs, wodurch ein Mittelrohr des Fernglases schlanker, z.B. mit 1", 30 mm oder 34 mm Durchmesser gestaltet werden kann. Das Zielfernrohr ist folglich nicht so groß, wirkt eleganter und ist komfortabler in der Handhabung. Insbesondere stehen auch am Mittelrohr angeordnete Verstelltürme für die Justierung des Zielfernrohrs nicht übermäßig weit hervor.

Dazu kann zwischen der Feldlinse und der ersten Bildebene eine Korrekturfeldlinse angeordnet sein, wobei die Korrekturfeldlinse bevorzugt an der ersten Bildebene angeordnet ist. Mittels einer solchen Korrekturfeldlinse lassen sich Bildfehler korrigieren, wodurch ein klares, scharfes, farblich korrektes und bis zum Rand hin ausgeleuchtetes Bild für den Schützen erzeugt wird. Dabei besteht die Möglichkeit, dass die Korrekturfeldlinse mit einem Absehen verkittet ist, sofern ein solches in der ersten Bildebene vorgesehen ist. Verkittete optische Bauteile haben Vorteile hinsichtlich der Montierbarkeit und der Anzahl der vorzusehenden Befestigungsmittel. Außerdem ist eine verkittete Bauteilgruppe unanfällig gegen Verschmutzungen.

Insbesondere bei hochzoomigen Zielfernrohren hat es sich als vorteilhaft erwiesen, wenn zwischen dem zweiten optischen Element und der zweiten Bildebene eine Strahlumlenkeinrichtung angeordnet ist, die bevorzugt eine streuende Linse ist. Es kann sich dabei auch um eine Kittlinse mit achromatischen Eigenschaften handeln. Eine solche Linse erhöht die Vergrößerung eines Zielfernrohrs bei gleicher Baugröße deutlich. So könnte die Strahlumlenkeinrichtung z.B. eine Barlow-Linse sein. Zusätzlich ist vorsehbar, dass die Strahlumlenkeinrichtung ebenso wie die optischen Elemente axial bewegbar ist. Eine feststehende Strahlumlenkeinrichtung erhöht die mechanische Komplexität jedoch wesentlich weniger.

In einer alternativen Ausgestaltung der Erfindung ist vorgesehen, dass das Umkehrsystem durch eine Faseroptik ausgebildet ist, die sich von der ersten Bildebene bis zur zweiten Bildebene erstreckt. Zwar ist mittels der Faseroptik keine variable Vergrößerung innerhalb des Umkehrsystems möglich, dafür ist jedoch das Bild auf der zweiten Bildebene sehr hell und klar. Somit ist auch das Bild, das von der optischen Einrichtung in der zweiten Bildebene sichtbar gemacht wird sehr hell und kontrastreich.

Besonders bevorzugt ist auf der dem Umkehrsystem abgewandten Seite der zweiten Bildebene ein Okular angeordnet. Dieses dient der Vergrößerung des von der optischen Einrichtung sichtbar gemachten Bildes. Das Okular hat den wesentlichen Vorteil, dass das relativ kleine von der optischen Einrichtung sichtbar gemachte Bild deutlich besser betrachtbar ist. Da das von der optischen Einrichtung sichtbar gemachte Bild unabhängig von der gewählten Vergrößerung den gleichen Durchmesser hat, hat auch die Austrittspupille des Okulars stets den gleichen Durchmesser. Die Anforderungen an die Positionierung des Auges zum Okular sind somit unabhängig von der gewählten Vergrößerung. Durch die Okularvergrößerung können selbst Ziele in sehr großer Distanz komfortabel und schnell ins Visier genommen sowie über einen längeren Zeitraum beobachtet werden.

Das Okular kann neben einer Okularlinse auch einen Okular-Achromat aufweisen, wobei letzterer auf der dem Umkehrsystem abgewandten oder zugewandten Seite der Okularlinse angeordnet ist. Ein solcher Okular-Achromat kann ebenfalls Farbfehler verringern, die ansonsten durch unterschiedliche Brechungsindexe der verschiedenen Lichtwellenlängen verursacht werden.

Ferner sieht eine Ausbildung des Zielfernrohrs vor, dass die optische Einrichtung einen Abstrahlwinkel hat, sodass die dem Umkehrsystem abgewandte numerische Apertur des in der zweiten Bildebene vorhandenen Zwischenbildes größer ist als die umkehrsystemseitige numerische Apertur. Bevorzugt ist der Abstrahlwinkel so groß, dass die dem Umkehrsystem abgewandte numerische Apertur gleich oder größer ist als eine numerische Apertur des sich anschließenden Okulars und dies besonders bevorzugt auch bei der maximalen Vergrößerung des Zielfernrohrs. Die Austrittspupille hat so stets den für das verwendete Okular maximal möglichen Durchmesser, was die Positionierung des Auges vor dem Okular sehr einfach macht. Es ist für den Schützen somit selbst bei großen Vergrößerungen sehr komfortabel ein Zielobjekt ins Visier zu nehmen und über einen längeren Zeitraum zu beobachten. Helligkeitsverluste durch den Abstrahlwinkel können jedoch erfordern, dass die Austrittspupille nicht auf den maximal möglichen Durchmesser aufgeweitet wird. Auch eine teilweise Aufweitung stellt bereits einen großen Vorteil dar.

In einer Ausgestaltung weist die optische Einrichtung einen Diffusor auf. Ein solcher Diffusor ist geeignet dazu, Licht zu streuen, wodurch das in der zweiten Bildebene vorhandene Zwischenbild sichtbar ist. Je nach der stärke der Diffusion kann der Abstrahlwinkel ausgelegt werden, insbesondere so, dass die Austrittspupille groß und die Bildqualität dennoch möglichst hoch ist.

Der Diffusor kann hierbei eine Mattscheibe mit einer planen mattierten ersten Oberfläche und einer planen polierten zweiten Oberfläche sein. Eine solche Mattscheibe ist besonders einfach herstellbar und die Herstellkosten sind dementsprechend gering. Regelmäßig werden solche Mattscheiben auch als Streuscheiben bezeichnet. Idealerweise steht die Mattscheibe senkrecht zur optischen Achse.

Eine besonders hohe Bildgüte wird erreicht, wenn die erste Oberfläche in der zweiten Bildebene angeordnet ist. Die erste Oberfläche ist hierbei vorzugsweise durch Ätzung oder Schliff hergestellt oder eine Mikrostruktur. Die Mikrostruktur kann beispielsweise eine technisch erzeugte Mikrowabenstruktur sein.

Vorgesehen ist weiterhin, dass die zweite Oberfläche auf der dem Umkehrsystem abgewandten Seite der zweiten Bildebene angeordnet ist. Hierdurch hat das Bild auf der Mattscheibe eine sehr hohe Bildgüte. Außerdem verschiebt sich so die zweite Bildebene nicht, wodurch bereits ausgelegte optische Anordnungen übernommen werden können. Dies ist insbesondere deshalb von Vorteil, da Bauteile aus bestehenden Werkzeugen übernommen werden können. Hierdurch sind die Herstellkosten des Zielfernrohrs gering, da weniger neue Werkzeuge für hochpräzise Bauteile erforderlich sind.

Eine andere Ausbildung der Erfindung sieht vor, dass der Diffusor ein holographisches Element ist. Ein derartiger Diffusor ist geeignet, um bei der Rückprojektion ein sehr helles und kontrastreiches Bild sichtbar zu machen. Außerdem hat ein derartiger Diffusor eine sehr genaue definierte Abstrahlcharakteristik, wodurch eine hohe Bildgüte erreicht wird.

Als weiteres zusätzliches Element kann ein Bildverstärker zwischen der zweiten Bildebene und der optischen Einrichtung angeordnet sein. Bildverstärker bestehen zumeist aus Elektronenröhren, die geringe Lichtmengen verstärken, sodass auch bei geringer Lichtstärke, z.B. bei Dämmerung, ein helles Bild von der optischen Einrichtung sichtbar gemacht wird.

Weiterhin kann eine Faseroptik zwischen der zweiten Bildebene und der optischen Einrichtung angeordnet sein, wobei die Faseroptik die zweite Bildebene auf der dem Umkehrsystem abgewandten Seite tangiert. Eine Faseroptik ist ein optisches Element, das aus vielen parallel angeordneten Glasfasern als Lichtleitern besteht. Meist sind diese miteinander zu einem mechanisch homogenen Block verschmolzen. Durch die Fasercharakteristik entspricht das eingangsseitige Bild der zweiten Bildebene dem Bild auf der Rückseite der Faseroptik. Die Faseroptik liegt also in der zweiten Bildebene. Man könnte die ausgangsseitige Bildebene jedoch auch als dritte Bildebene bezeichnen. Hinter der Faseroptik wird das Bild der zweiten Bildebene dann durch die optische Einrichtung sichtbar gemacht. Mittels einer solchen Faseroptik können besonders kleine Abmessungen und/oder hohe Lichtstärken erreicht werden.

Auch kann die optische Einrichtung einen Strahlenteiler aufweisen. Der Strahlenteiler könnte hierfür auf der Seite der zweiten Bildebene eine diffuse bzw. matte Oberfläche haben. Der Strahlenteiler wäre dann sozusagen eine dicke Mattscheibe mit Strahlenteilung. Dieser kann dazu verwendet werden, eine Zielmarke oder andere Informationen im Zielfernrohr einzuspiegeln.

Letztlich könnte auch eine Fresnel-Linse auf der dem Umkehrsystem zugewandten oder abgewandten Seite der optischen Einrichtung angeordnet sein. Fresnel-Linsen sind in ringförmige Stufen aufgeteilt, wodurch das Gewicht und Volumen besonders bei Linsen mit kurzer Brennweite deutlich verringert ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine optische Anordnung für ein Zielfernrohr mit optischer Einrichtung;
- Fig. 2: eine optische Anordnung für ein Zielfernrohr mit optischer Einrichtung, Okular, Korrekturfeldlinse, Strahlumlenkeinrichtung und Achromaten;
- Fig. 3: ein Zielfernrohr mit optischer Einrichtung, Okular, Korrekturfeldlinse, Strahlumlenkeinrichtung und Achromaten;
- Fig. 4: einen Ausschnitt einer optischen Anordnung für ein Zielfernrohr mit optischer Einrichtung und Faseroptik;
- Fig. 5: einen Ausschnitt einer optischen Anordnung für ein Zielfernrohr mit optischer Einrichtung und Bildverstärker;
- Fig. 6: einen Ausschnitt einer optischen Anordnung für ein Zielfernrohr mit optischer Einrichtung und Strahlenteiler.

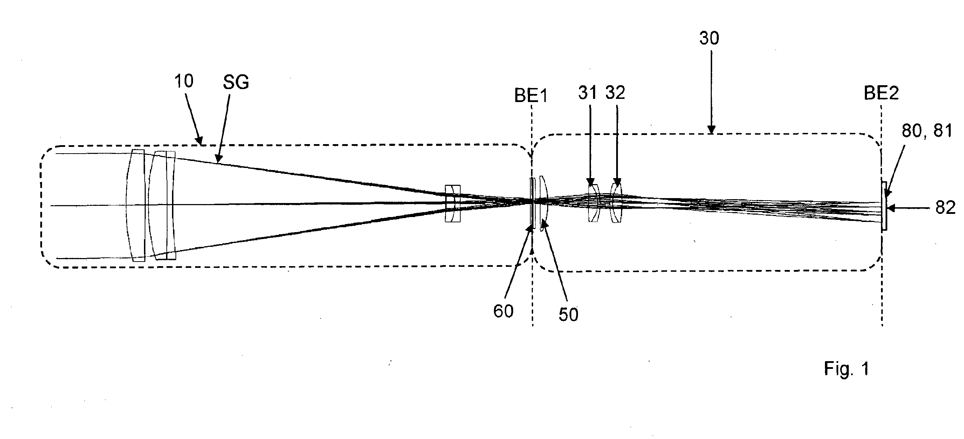

Fig. 1 zeigt eine optische Anordnung für ein Zielfernrohr mit einem Objektiv 10 und einem Umkehrsystem 30 mit zwei optischen Elementen 31, 32. Zwischen dem Objektiv 10 und dem Umkehrsystem 30 ist eine erste Bildebene BE1, sowie auf der dem Objektiv 10 abgewandten Seite des Umkehrsystems 30 eine zweite Bildebene BE2 angeordnet. Zudem befindet sich in der ersten Bildebene BE1 ein Absehen 60 und zwischen dem Absehen 60 und den optischen Elementen 31, 32 eine Feldlinse 50. Durch die optische Anordnung verläuft ein Strahlengang SG. Ein so von dem Objektiv 10 in der ersten Bildebene BE1 entworfenes Zwischenbild ist aufgerichtet und vergrößert in der zweiten Bildebene BE2 abgebildet, in der eine optische Einrichtung 80 mit einem Diffusor 81 angeordnet ist. Aus der von dem Umkehrsystem 30 abgewandten Richtung der optischen Einrichtung 80 ist das Bild in der zweiten Bildebene BE2 nunmehr auf einer Art Schirm 82 betrachtbar.

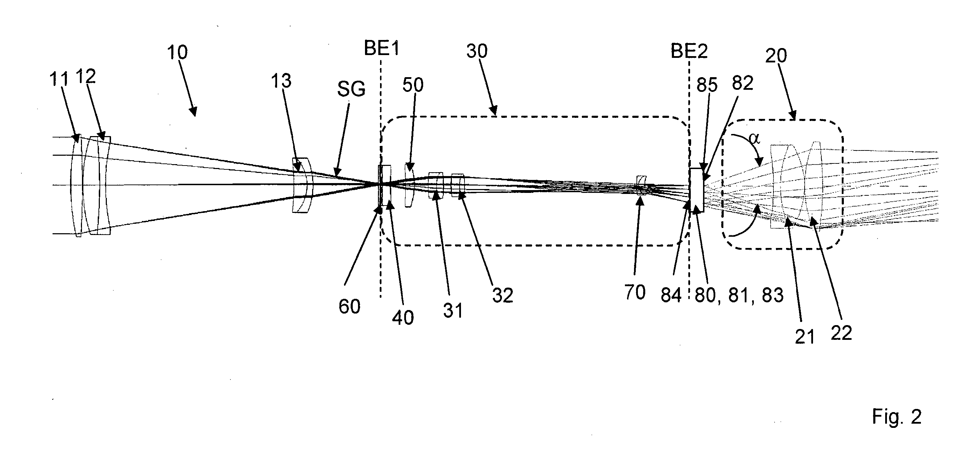

Fig. 2 stellt eine optische Anordnung für ein Zielfernrohr mit einem Objektiv 10 und einem Umkehrsystem 30 mit zwei optischen Elementen 31, 32 dar. Zwischen dem Objektiv 10 und dem Umkehrsystem 30 ist eine erste Bildebene BE1, sowie auf der dem Objektiv 10 abgewandten Seite des Umkehrsystems 30 eine zweite Bildebene BE2 angeordnet.

Dabei besteht das Objektiv 10 aus einer Objektivlinse 11, einem zwischen der Objektivlinse 11 und der ersten Bildebene BE1 angeordneten ersten Objektiv-Achromat 12 und einem zwischen dem ersten Objektiv-Achromat 12 und der ersten Bildebene BE1 angeordneten zweiten Objektiv-Achromat 13. Weiterhin ist in der ersten Bildebene BE1 ein Absehen 60 angeordnet, das auf der dem Objektiv 10 abgewandten Seite mit einer Korrekturfeldlinse 40 verkittet ist. Zwischen den beiden optischen Elementen 31, 32 und der Korrekturfeldlinse 40 befindet sich eine Feldlinse 50, sowie zwischen den beiden optischen Elementen 31, 32 und der zweiten Bildebene BE2 eine Strahlumlenkeinrichtung 70.

Durch die optische Anordnung verläuft ein Strahlengang SG. Ein so von dem Objektiv 10 in der ersten Bildebene BE1 entworfenes Zwischenbild ist aufgerichtet und vergrößert in der zweiten Bildebene BE2 abgebildet, in der eine optische Einrichtung 80 mit einem Diffusor 81 angeordnet ist. Dieser Diffusor 81 ist als Mattscheibe 83 mit einer planen matten ersten Oberfläche 84 und einer planen polierten zweiten Oberfläche 85 ausgebildet. Dabei ist die erste Oberfläche 84 in der zweiten Bildebene BE2 angeordnet und die zweite Oberfläche 85 befindet sich auf der dem Umkehrsystem 30 abgewandten Seite der zweiten Bildebene BE2.

Aus der von dem Umkehrsystem 30 abgewandten Richtung der optischen Einrichtung 80 ist das Bild in der zweiten Bildebene BE2 nunmehr grundsätzlich ohne weitere Bauteile auf einer Art Schirm 82 betrachtbar. Gemäß der Darstellung ist zur Betrachtung jedoch zusätzlich ein Okular 20 vorgesehen, das eben auf dieser vom Umkehrsystem 30 abgewandten Seite der optischen Einrichtung 80 angeordnet ist. Das Okular 20 besteht dabei aus einer Okularlinse 21 und einem zwischen der Okularlinse 21 und der optischen Einrichtung 80 angeordneten Okular-Achromat 22.

Die Mattscheibe 83 hat einen Abstrahlwinkel α, der so ausgelegt ist, dass die dem Umkehrsystem 30 abgewandte numerische Apertur des in der zweiten Bildebene BE2 vorhandenen Zwischenbildes größer ist als die umkehrsystemseitige numerische Apertur. Besonders vorteilhaft ist, dass der Abstrahlwinkel α so groß ist, dass die dem Umkehrsystem 30 abgewandte numerische Apertur gleich oder größer ist als eine numerische Apertur des sich anschließenden Okulars 20 und dies besonders bevorzugt auch bei der maximalen Vergrößerung des Zielfernrohrs. Hierdurch hat die Austrittspupille den Durchmesser der maximalen numerischen Apertur des Okulars 20.

Das erste optische Element 31 ist bewegbar und objektivseitig im Umkehrsystem 30 und das zweite optische Element 32 bewegbar auf Seiten der zweiten Bildebene BE2 im Umkehrsystem 30 angeordnet. Hierdurch ist das in der ersten Bildebene BE1 entworfene Zwischenbild mit einer veränderbaren Vergrößerung in der zweiten Bildebene BE2 abgebildet. Durch den Abstrahlwinkel α ist die numerische Apertur des Zwischenbildes der zweiten Bildebene BE2 dabei in der gezeigten Vergrößerungseinstellung auf einen Abstrahlwinkel α aufgeweitet, der ungefähr der maximalen numerischen Apertur des Okulars 20 entspricht. Die Austrittspupille hat so den für das verwendete Okular 20 maximal möglichen Durchmesser. Hierdurch hat der Schütze die Möglichkeit, auch weit außerhalb der optischen Achse das vollständige Zwischenbild zu betrachten. Das Auge ist in kritischen Situationen somit wesentlich schneller korrekt zur Austrittspupille positionierbar, wodurch ein Zielobjekt besonders schnell ins Visier nehmbar ist. Außerdem ist es weniger anstrengend, das Schussfeld über einen längeren Zeitraum zu beobachten.

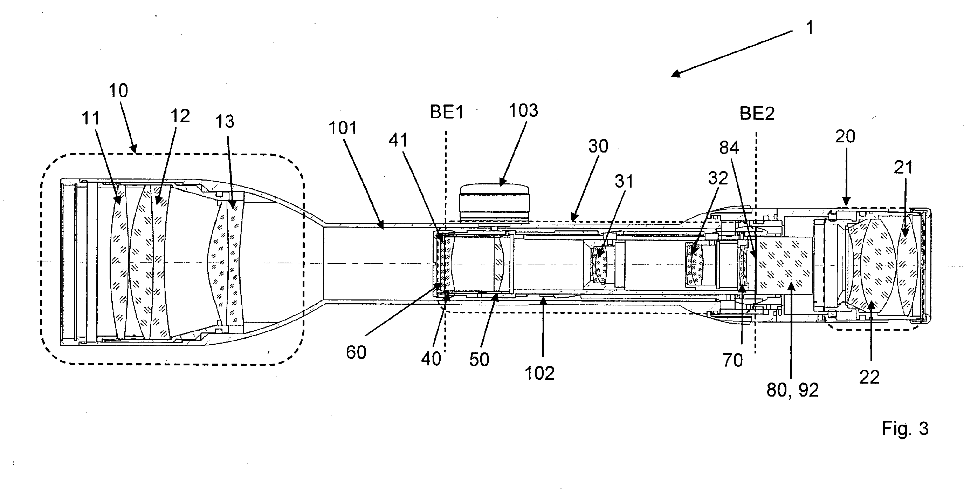

In Fig. 3 findet sich ein Zielfernrohr 1, in dessen Gehäuse 101 ein Objektiv 10 und ein Umkehrsystem 30 angeordnet sind. Das Umkehrsystem 30 hat einen Tubus 102, der über ein Verstellrad 103 innerhalb des Gehäuses 101 bewegbar ist. Im Tubus 102 sind zwei axial bewegbare optische Elemente 31, 32 angeordnet. Zwischen dem Objektiv 10 und dem Umkehrsystem 30 befindet sich eine erste Bildebene BE1, sowie auf der dem Objektiv 10 abgewandten Seite des Umkehrsystems 30 eine zweite Bildebene BE2.

Dabei besteht das Objektiv 10 aus einer Objektivlinse 11, einem zwischen der Objektivlinse 11 und der ersten Bildebene BE1 angeordneten ersten Objektiv-Achromat 12 und einem zwischen dem ersten Objektiv-Achromat 12 und der ersten Bildebene BE1 angeordneten zweiten Objektiv-Achromat 13. Die Objektivlinse 11, der erste Objektiv-Achromat 12 und der zweite Objektiv-Achromat 13 sind jeweils im Gehäuse 101 fixiert, wobei diese alternativ auch beweglich angeordnet sein könnten, um eine Parallaxe-Einstellung vornehmen zu können. Weiterhin ist in der ersten Bildebene BE1 ein Absehen 60 angeordnet und mit dem Tubus 102 verbunden. Das Absehen 60 ist auf der dem Objektiv 10 abgewandten Seite mit einer Korrekturfeldlinse 40 verkittet, die somit ebenfalls im Tubus 102 fixiert ist. Zwischen den beiden optischen Elementen 31, 32 und der Korrekturfeldlinse 40 befindet sich eine im Tubus 101 fixierte Feldlinse 50, sowie zwischen den beiden optischen Elementen 31, 32 und der zweiten Bildebene BE2 eine im Tubus 101 fixierte Strahlumlenkeinrichtung 70.

Ein von dem Objektiv 10 in der ersten Bildebene BE1 entworfenes Zwischenbild ist aufgerichtet und vergrößert in der zweiten Bildebene BE2 abgebildet, an der eine im Tubus 101 fixierte optische Einrichtung 80 angeordnet ist. Diese optische Einrichtung 80 wird von einem Strahlenteiler 92 mit einer planen mattierten ersten Oberfläche 84 gebildet. Dabei ist die erste Oberfläche 84 in der zweiten Bildebene BE2 angeordnet und der Rest des Strahlenteilers 92 befindet sich auf der vom Umkehrsystem 30 abgewandten Seite der zweiten Bildebene BE2.

Zur Betrachtung des Bildes in der zweiten Bildebene BE2 aus der von dem Umkehrsystem 30 abgewandten Richtung der optischen Einrichtung 80 ist ein Okular 20 im Gehäuse 101 vorgesehen. Dieses ist auf der vom Umkehrsystem 30 abgewandten Seite der optischen Einrichtung 80 angeordnet. Es besteht hierfür aus einer Okularlinse 21 und einem zwischen der Okularlinse 21 und der optischen Einrichtung 80 angeordneten Okular-Achromat 22. Die Okularlinse 21 und der Okular-Achromat 22 sind beide im Gehäuse 101 fixiert.

Das erste optische Element 31 ist bewegbar und objektivseitig im Umkehrsystem 30 und das zweite optische Element 32 bewegbar auf Seiten der zweiten Bildebene BE2 im Umkehrsystem 30 angeordnet. Hierdurch ist das in der ersten Bildebene BE1 entworfene Zwischenbild mit einer veränderbaren Vergrößerung in der zweiten Bildebene BE2 abgebildet und kann mittels des Okulars 20 betrachtet werden.

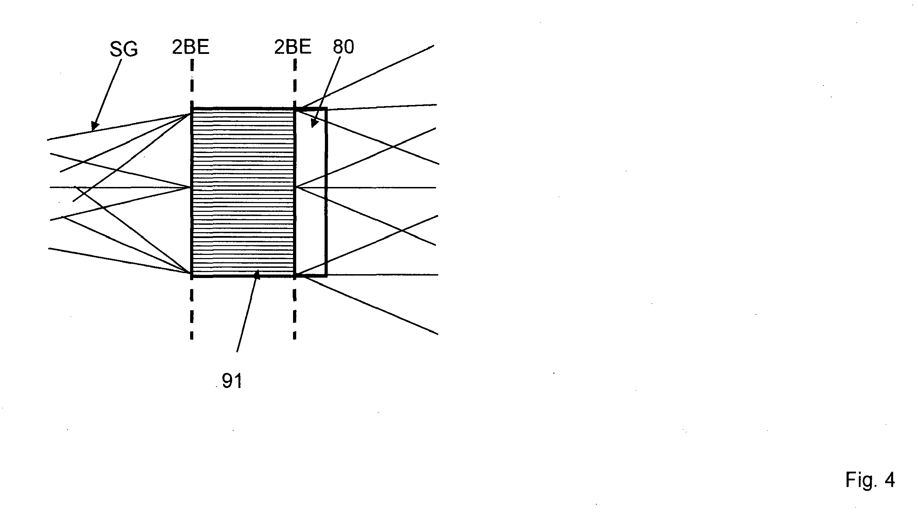

Fig. 4 zeigt einen Ausschnitt einer optischen Anordnung für ein Zielfernrohr mit einer optischen Einrichtung 80 und einer Faseroptik 91. Die Faseroptik 91 ist in der zweiten Bildebene BE2 angeordnet. Insbesondere tangiert die Faseroptik 91 die zweite Bildebene BE2 auf der einem Umkehrsystem abgewandten Seite. Durch die Fasercharakteristik entspricht das eintrittseitige Bild eines Strahlengangs SG in der zweiten Bildebene BE2 dem auf der Rückseite der Faseroptik 91. An letztere grenzt ausgangsseitig die optische Einrichtung 80, wodurch das in der zweiten Bildebene BE2 vorhandene Bild sichtbar gemacht wird.

Im gezeigten Fall entspricht das Bild am Eintritt in die Faseroptik 91 also dem am Austritt der Faseroptik 91. Grundsätzlich besteht jedoch auch die Möglichkeit, dass die einzelnen Fasern der Faseroptik 91 nicht parallel zur optischen Achse der optischen Anordnung verlaufen. Durch einen entsprechenden Verlauf der Fasern kann die Faseroptik auch ein Bild umkehren. Somit könnte ein Umkehrsystem durch die Faseroptik 91 gebildet sein. Dementsprechend würde sich die Faseroptik 91 von einer ersten Bildebene bis zur zweiten Bildebene BE2 erstrecken.

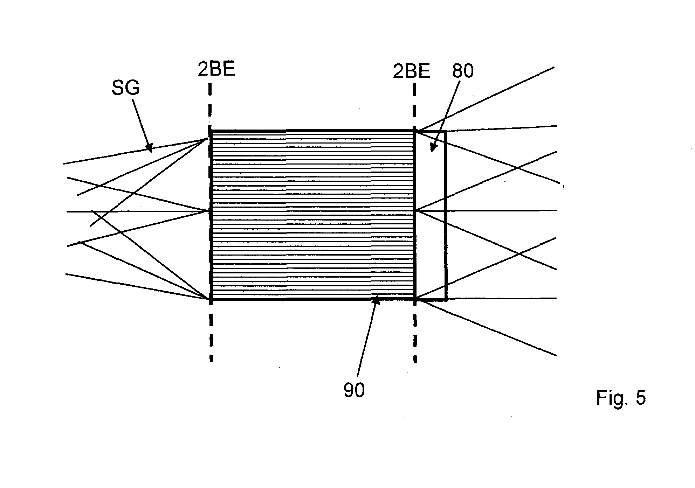

Fig. 5 enthält einen Ausschnitt einer optischen Anordnung für ein Zielfernrohr mit einer optischen Einrichtung 80 und einem Bildverstärker 90. Auf einer Seite einer zweiten Bildebene BE2 ist die optische Einrichtung 80 angeordnet. Auf der anderen Seite befindet sich der Bildverstärker 90. Dieser verlängert die zweite Bildebene BE2 derart, dass er auf der ersten Seite eindringende Strahlen eines Strahlengangs SG entlang einzelner Fasern zu einer zweiten Seite leitet und zusätzlich verstärkt. Im gezeigten Fall entspricht das Bild am Eintritt in die Faseroptik 91 dem am Austritt der Faseroptik 91 hinsichtlich der Form und Ausrichtung. Dazu wurde jedoch das einfallende Licht verstärkt.

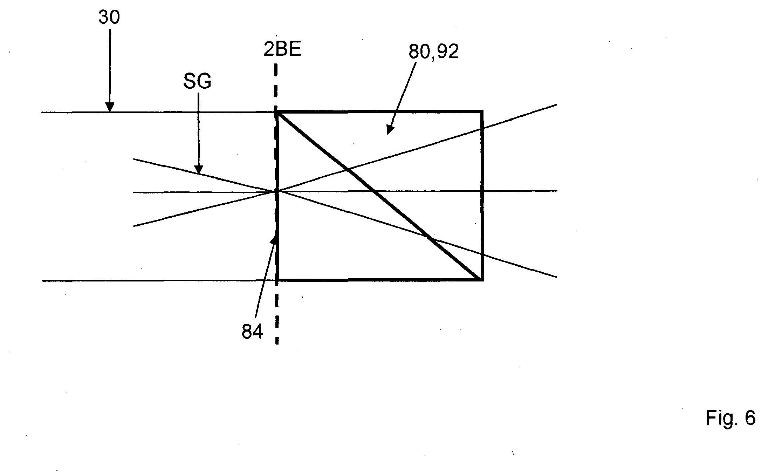

Fig. 6 stellt einen Ausschnitt einer optischen Anordnung für ein Zielfernrohr mit einer optischen Einrichtung 30, einem angedeuteten Umkehrsystem 30 und einem Strahlenteiler 92 dar. Dabei bildet der Strahlenteiler 92 die optische Einrichtung 80, indem die in einer zweiten Bildebene BE2 angeordnete Seite des Strahlenteilers 92 eine matte erste Oberfläche 84 ist. Das Umkehrsystem 30 ist auf der dem Strahlenteiler 92 gegenüberliegenden Seite der zweiten Bildebene BE2 angeordnet. Durch den Ausschnitt der optischen Anordnung verläuft ein Strahlengang SG.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Zielfernrohr
- 10: Objektiv
- 11: Objektivlinse
- 12: erster Objektiv-Achromat
- 13: zweiter Objektiv-Achromat
- 20: Okular
- 21: Okularlinse
- 22: Okular-Achromat
- 30: Umkehrsystem
- 31: erstes optisches Element
- 32: zweites optisches Element
- 40: Korrekturfeldlinse
- 50: Feldlinse
- 60: Absehen
- 70: Strahlumlenkeinrichtung
- 80: optische Einrichtung

- 81: Diffusor
- 82: Schirm
- 83: Mattscheibe
- 84: erste Oberfläche
- 85: zweite Oberfläche
- 90: Bildverstärker
- 91: Faseroptik
- 92: Strahlenteiler
- 101: Gehäuse
- 102: Tubus
- 103: Verstellrad
- BE1: erste Bildebene
- BE2: zweite Bildebene
- SG: Strahlengang
- α: Abstrahlwinkel

## Patentansprüche

1. Zielfernrohr (1) mit einem Objektiv (10) und einem Umkehrsystem (30),
■ wobei zwischen dem Objektiv (10) und dem Umkehrsystem (30) eine erste Bildebene (BE1), sowie auf der dem Objektiv (10) abgewandten Seite des Umkehrsystems (30) eine zweite Bildebene (BE2) angeordnet sind,
■ wobei ein von dem Objektiv (10) in der ersten Bildebene (BE1) entworfenes Zwischenbild aufgerichtet in der zweiten Bildebene (BE2) abgebildet ist, und
■ wobei auf der dem Umkehrsystem (30) abgewandten Seite der zweiten Bildebene (BE2) ein Okular (20) angeordnet ist,
**dadurch gekennzeichnet**,
■ dass auf der dem Objektiv (10) abgewandten Seite des Umkehrsystems (30) eine optische Einrichtung (80) zur Sichtbarmachung des in der zweiten Bildebene (BE2) vorhandenen Zwischenbilds angeordnet ist,
■ dass die optische Einrichtung (80) in der zweiten Bildebene (BE2) angeordnet ist, und
■ dass die optische Einrichtung (80) einen Diffusor (81) aufweist,
■ wobei der Diffusor (81) eine Mattscheibe (83) mit einer planen mattierten ersten Oberfläche (84) und einer planen polierten zweiten Oberfläche (85) ist, und
■ wobei die erste Oberfläche (84) in der zweiten Bildebene (BE2) angeordnet ist.

2. Zielfernrohr (1) nach Anspruch 1, **dadurch gekennzeichnet, dass** in der ersten Bildebene (BE1) ein Absehen (60) angeordnet ist oder die optische Einrichtung (80) ein Absehen (60) aufweist.

3. Zielfernrohr (1) nach einem der vorhergehenden Ansprüche, **dadurch gekennzeichnet, dass** das Umkehrsystem (30) ein erstes optisches Element (31) und ein zweites optisches Element (32) aufweist, wobei vorzugsweise das erste optische Element (31) bewegbar und objektivseitig im Umkehrsystem (30) und das zweite optische Element (32) bewegbar und auf Seiten der zweiten Bildebene (BE2) im Umkehrsystem (30) angeordnet sind, wodurch das in der ersten Bildebene (BE1) entworfene Zwischenbild mit einer veränderbaren Vergrößerung in der zweiten Bildebene (BE2) abgebildet ist.

4. Zielfernrohr (1) nach einem der vorhergehenden Ansprüche, **dadurch gekennzeichnet, dass** zwischen dem ersten optischen Element (31) und der ersten Bildebene (BE1) eine Feldlinse (50) angeordnet ist.

5. Zielfernrohr (1) nach Anspruch 4, **dadurch gekennzeichnet, dass** zwischen der Feldlinse (50) und der ersten Bildebene (BE1) eine Korrekturfeldlinse (40) angeordnet ist, wobei die Korrekturfeldlinse (40) bevorzugt an der ersten Bildebene (BE1) angeordnet ist.

6. Zielfernrohr (1) nach einem der Ansprüche 4 bis 5, **dadurch gekennzeichnet, dass** zwischen dem zweiten optischen Element (32) und der zweiten Bildebene (BE2) eine Strahlumlenkeinrichtung (70) angeordnet ist, die bevorzugt eine streuende Linse ist.

7. Zielfernrohr (1) nach einem der Ansprüche 1 bis 2, **dadurch gekennzeichnet, dass** das Umkehrsystem (30) durch eine Faseroptik (91) ausgebildet ist, die sich von der ersten Bildebene (BE1) bis zur zweiten Bildebene (BE2) erstreckt.

8. Zielfernrohr (1) nach einem der vorhergehenden Ansprüche, **dadurch gekennzeichnet, dass** die optische Einrichtung (80) einen Abstrahlwinkel (α) hat, sodass die dem Umkehrsystem (30) abgewandte numerische Apertur des in der zweiten Bildebene (BE2) vorhandenen Zwischenbildes größer ist als die umkehrsystemseitige numerische Apertur.

9. Zielfernrohr (1) nach einem der Ansprüche 1 bis 8, **dadurch gekennzeichnet, dass** die erste Oberfläche (84) durch Ätzung oder Schliff hergestellt oder eine Mikrostruktur ist.

10. Zielfernrohr (1) nach einem der Ansprüche 1 bis 9, **dadurch gekennzeichnet, dass** die zweite Oberfläche (85) auf der dem Umkehrsystem (30) abgewandten Seite der zweiten Bildebene (BE2) angeordnet ist.

11. Zielfernrohr (1) nach einem der Ansprüche 1 bis 8, **dadurch gekennzeichnet, dass** der Diffusor (81) ein holographisches Element ist.

## Claims

1. Sighting telescope (1) comprising an objective (10) and a reversing system (30),
• a first image plane being (BE1) being arranged between the objective (10) and the reversing system (30), and a second image plane (BE2) being arranged on the side of the reversing system (30) facing away from the objective (10),
• an intermediate image projected from the objective (10) in the first image plane (BE1) being shown upright in the second image plane (BE2),
• an ocular (20) being arranged on the side of the second image plane (EB2) facing away from the reversing system (30),
**characterised in that**
• on the side of the reversing system (30) facing away from the objective (10), an optical device (80) is arranged to make visible the intermediate image present in the second image plane (BE2),
• **in that** the optical device (80) is arranged in the second image plane (BE2), and
• **in that** the optical device (80) has a diffuser (81),
• the diffuser (81) having a matte screen (83) fitted with a planar, matte first surface (84) and a planar, polished second surface (85), and
• the first surface (84) being arranged in the second image plane (BE2).

2. Sighting telescope (1) according to claim 1, **characterised in that** a reticle (60) is arranged in the first image plane (BE1) or the optical device (80) has a reticle (60).

3. Sighting telescope (1) according to any of the preceding claims, **characterised in that** the reversing system (30) has a first optical element (31) and a second optical element (32), the first optical element (31) preferably being arranged in the reversing system (30) so as to be displaceable and on the objective side and the second optical element (32) being arranged in the reversing system (30) so as to be displaceable and on sides of the second image plane (BE2), whereby the intermediate image projected in the first image plane (BE1) is shown at variable magnification in the second image plane (BE2).

4. Sighting telescope (1) according to any of the preceding claims, **characterised in that** a field lens (50) is arranged between the first optical element (31) and the first image plane (BE1).

5. Sighting telescope (1) according to claim 4, **characterised in that** a correction field lens (40) is arranged between the field lens (50) and the first image plane (BE1), the correction field lens (40) preferably being arranged at the first image plane (BE1).

6. Sighting telescope (1) according to either claim 4 or claim 5, **characterised in that** a beam deflection device (70), preferably a dispersive lens, is arranged between the second optical element (32) and the second image plane (BE2).

7. Sighting telescope (1) according to either claim 1 or claim 2, **characterised in that** the reversing system (30) is formed by fibre optics (91) extending from the first image plane (BE1) to the second image plane (BE2).

8. Sighting telescope (1) according to any of the preceding claims, **characterised in that** the optical device (80) has an angle of reflection (α) such that the numerical aperture, facing away from the reversing system (30), of the intermediate image present in the second image plane (BE2) is larger than the numerical aperture on the reversing system side.

9. Sighting telescope (1) according to any of claims 1 to 8, **characterised in that** the first surface (84) is made by etching or grinding or is a microstructure.

10. Sighting telescope (1) according to any of claims 1 to 9, **characterised in that** the second surface (85) is arranged on the side of the second image plane (BE2) facing away from the reversing system (30).

11. Sighting telescope (1) according to any of claims 1 to 8, **characterised in that** the diffuser (81) is a holographic element.

## Revendications

1. Lunette de visée (1) pourvue d'un objectif (10) et d'un système de redressement (30),
• dans laquelle il est aménagé un premier plan-image (BE1) entre l'objectif (10) et le système de redressement (30) ainsi qu'un second plan-image (BE2) sur le côté du système de redressement (30) opposé à l'objectif (10),
• dans laquelle une image intermédiaire élaborée par l'objectif (10) dans le premier plan-image (BE1) est redressée dans le second plan-image (BE2) et
• dans laquelle un oculaire (20) est disposé sur le côté du second plan-image (BE2) opposé au système de redressement (30),
**caractérisée en ce que** :
• il est agencé, sur le côté du système de redressement (30) opposé à l'objectif (10), un dispositif optique (80) pour visualiser l'image intermédiaire présente dans le second plan-image (BE2),
• le dispositif optique (80) est ménagé dans le second plan-image (BE2) et
• le dispositif optique (80) présente un diffuseur (81),
• dans laquelle le diffuseur (81) est un écran dépoli (83) avec une première surface plane dépolie (84) et une seconde surface plane polie (85) et
• dans laquelle la première surface (84) est ménagée dans le second plan-image (BE2).

2. Lunette de visée (1) selon la revendication 1, **caractérisée en ce qu'**un réticule (60) est aménagé dans le premier plan-image (BE1) ou le dispositif optique (80) présente un réticule (60).

3. Lunette de visée (1) selon l'une quelconque des revendications précédentes, **caractérisée en ce que** le système de redressement (30) présente un premier élément optique (31) et un second élément optique (32), dans laquelle, de préférence, le premier élément optique (31) est mobile et est agencé côté objectif dans le système de redressement (30) et le second élément optique (32) est mobile et est situé sur les côtés du second plan-image (BE2) dans le système de redressement (30), dans laquelle l'image intermédiaire élaborée dans le premier plan-image (BE1) se présente avec un grossissement variable dans le second plan-image (BE2).

4. Lunette de visée (1) selon l'une quelconque des revendications précédentes, **caractérisée en ce qu'**une lentille de champ (50) est aménagée entre le premier élément optique (31) et le premier plan-image (BE1) .

5. Lunette de visée (1) selon la revendication 4, **caractérisée en ce qu'**une lentille de champ correctrice (40) est aménagée entre la lentille de champ (50) et le premier plan-image (BE1), la lentille de champ correctrice (40) étant de préférence disposée dans le premier plan-image (BE1) .

6. Lunette de visée (1) selon l'une quelconque des revendications 4 à 5, **caractérisée en ce qu'**il est agencé entre le second élément optique (32) et le second plan-image (BE2) un dispositif déviateur de faisceau (70) qui est de préférence une lentille dispersive.

7. Lunette de visée (1) selon l'une quelconque des revendications 1 à 2, **caractérisée en ce que** le système de redressement (30) est formé par une optique à fibre (91) qui s'étend du premier plan-image (BE1) au second plan-image (BE2).

8. Lunette de visée (1) selon l'une quelconque des revendications précédentes, **caractérisée en ce que** le dispositif optique (80) a un angle de rayonnement (α) tel que l'ouverture numérique opposée au système de redressement (30) de l'image intermédiaire présente dans le second plan-image (BE2) est supérieure à l'ouverture numérique côté système de redressement.

9. Lunette de visée (1) selon l'une quelconque des revendications 1 à 8, **caractérisée en ce que** la première surface (84) est formée par gravure ou meulage ou est une microstructure.

10. Lunette de visée (1) selon l'une quelconque des revendications 1 à 9, **caractérisée en ce que** la seconde surface (85) est agencée sur le côté du second plan-image (BE2) opposé au système de redressement (30).

11. Lunette de visée (1) selon l'une quelconque des revendications 1 à 8, **caractérisée en ce que** le diffuseur (81) est un élément holographique.
